# EUROPEAN PATENT SPECIFICATION

(11) **EP 4 146 447 B1**
(45) Date of publication and mention of the grant of the patent: **14.08.2024**
(21) Application number: 21721534.2
(22) Date of filing: 28.04.2021
(51) Int. Cl.: B29B 7/48, B29B 7/60, B29B 7/52, B29B 7/74, B29B 7/18

(54) **PRODUCTION LINE FOR A RUBBER MIXTURE COMPRISING BOTH AN INTERNAL MIXER AND AT LEAST ONE TWIN-SCREW MIXING AND EXTRUSION MACHINE, AND RELATED METHOD**
PRODUKTIONSLINIE FÜR EINE KAUTSCHUKMISCHUNG AUFWEISEND EINEN INTERNEN MISCHER UND ZUMINDEST EINE ZWEISCHNECKENMISCH- UND -EXTRUSIONSMASCHINE, SOWIE ZUGEHÖRIGES VERFAHREN
ÉCHAÎNE DE PRODUCTION D'UN MÉLANGE DE CAOUTCHOUC COMPRENANT UN MÉLANGEUR INTERNE ET AU MOINS UNE MACHINE DE MÉLANGE ET D'EXTRUSION À DEUX VIS, ET PROCÉDÉ ASSOCIÉ

(30) Priority: 06.05.2020 FR 2004474
(43) Date of publication of application: 15.03.2023
(73) Proprietor: COMPAGNIE GENERALE DES ETABLISSEMENTS MICHELIN, 63000 Clermont-Ferrand (FR)
(72) Inventor: BARRIERE, Frédéric, 63040 Clermont-Ferrand Cedex 9 (FR); DUSSARDIER, Bruno, 63040 Clermont-Ferrand Cedex 9 (FR); HUC, Laurent, 63040 Clermont-Ferrand Cedex 9 (FR); TOURNEBIZE, Aurélien, 63040 Clermont-Ferrand Cedex 9 (FR); TSILAVO, Randria, 63040 Clermont-Ferrand Cedex 9 (FR)
(74) Representative: M.F.P. Michelin
(86) International application number: PCT/EP2021/061088
(87) International publication number: WO 2021/224085

(56) References cited:
- EP-A1- 1 552 914
- WO-A1-2017/102332
- WO-A1-2018/185386
- CN-Y- 2 442 828
- JP-A- 2002 144 398
- JP-A- S63 168 311
- KR-B1- 100 383 675

## Description

### TECHNICAL DOMAIN

The invention relates to lines for producing rubber mixtures. More particularly, the invention relates to lines for producing rubber mixtures using single-pass and multi-pass sequences and having at least one mixing machine of the twin-screw mixer type that performs a mixing process.

### BACKGROUND

The production of rubber mixtures involves multiple successive mixing steps. An initial mixture of elastomeric materials with a carbon black and/or silica filler is often performed inside an internal mixer (or "MI"), where the temperature of the mixture rises, for example, to values between 130°C and 180°C. An automated external mixer (also known as a "roll mixer" or "roller tool"), into which this mixture is then transferred, works by further circulating it between two rolls to transform it into a continuous sheet. Vulcanizing agents (including, but not limited to, sulfur) may be added to the mixture later in the mixing cycle to produce the final commercial mixture.

The rubber mixture that is selected for production in a given mixing cycle may be selectively obtained from a production sequence that is performed once (hereinafter referred to as a "single pass" sequence) or a production sequence that is performed twice or more (hereinafter referred to as a "multi-pass" sequence). In both cases, internal and external mixers are often present in production lines doing the sequences, allowing high productivity with a good quality compromise.

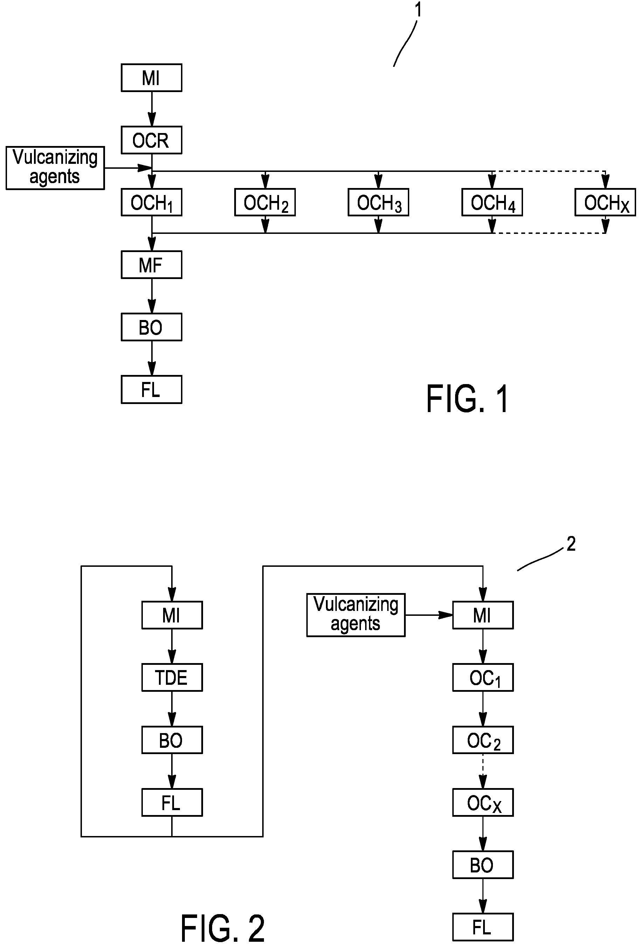

Referring to Figure 1, a production line 1 represents, as an example, a known single-pass sequence. The production line 1 includes an internal mixer MI that produces a masterbatch (the qualities of a masterbatch are described below). The production line 1 also includes a cooling roller tool (or "OCR") that cools the produced mixture (for example, to about 80°C). The cooled mixture exiting the OCR arrives at one or more homogenizing roller tools (or "OCH"), where vulcanizers from a vulcanization system are added to the cooled mixture. As shown in Figure 1, the production line 1 further includes OCHx homogenizing roller tools (where X varies from 1 to N depending on the chosen mixing recipe). In single pass sequences, several homogenizing roller tools are therefore used in order not to degrade the industrial performance of the line concerned. As represented in the prior art, the number of homogenizing roller tools used and their positioning in the line can be varied depending on the desired flow rates and properties (for example, see the systems in the production lines disclosed by Korean patent KR100559201 and Chinese patent CN102019649).

In production lines for rubber mixtures with single pass sequences, it is known to add a vulcanizing agent to the rubber mixture during the subsequent curing process. In order not to cause premature partial vulcanization of the rubber, the vulcanizing agent is not added at the same time as the other ingredients. A block of vulcanizing product (or "block") is therefore introduced, which is, for example, a mixture of sulfur and a retardant. Thus, once the aforementioned steps have been carried out, the mixture is transferred to a finishing station where the vulcanizing product is added to the mixture and mixed with it (see Applicant's patent EP2707189).

The documents WO2018/185386A1 and WO2017/102332A1 disclose a finishing station that could be conventional internal mixer with mixing blades.

As shown in Figure 1, the production line 1 further includes a shaping installation MF where shaping of the mixture exiting from the homogenizing cylinder tool(s) OCH is performed. Several devices are known to shape the produced mixture, including, without limitation, a calender(s) and extruder(s) (which include, for example, twin-screw extruders, or "TDEs").

Upon completion at the shaping installation MF, the production line 1 transfers the mixture to a batch-off installation BO of the production line. The batch-off installation BO carries out an anti-sticking and cooling process of the mixture as known to the skilled person. During this anti-sticking and cooling process, the batch-off installation BO receives the mixture from the shaping installation MF and transports it (e.g., on a conveyor) to an immersion unit of the batch-off installation, where the mixture is immersed in an anti-sticking liquid. The mixture is then conveyed to a cooling scallop rack, where the mixture is scalloped onto carrier bars of a conveyor chain. The suspended mixture is cooled and dried by fans.

Finally, the production line 1 transfers the mixture to an end-of-line installation FL of the production line. The end-of-line installation FL receives the cooled mixture from the batch-off installation BO and carries out at least one end-of-line process. The end-of-line installation FL includes equipment for performing an end-of-line process that can be selected from palletizing and storing the rubber mixture. The equipment that is installed to perform the end-of-line process can be combined with other end-of-line equipment.

Referring to Figure 2, a production line 2 represents, as an example, a known multi-pass sequence (see, for example, the solutions offered by HF Mixing Group at https://www.hf-mixinggroup.com/en/group/). A multi-pass sequence may include one or more successive passes through at least some of the equipment before a final pass. During multi-pass sequences, masterbatch products are produced by passing one or more times through a first line consisting of an internal mixer MI downstream of which is disposed an extruder or extruders (e.g., of the type TDE). At each pass, the mixture leaving a batch-off installation BO is palletized at a shaping installation MF. Depending on the required level of plasticity or homogenization of the produced mixture, one or more passes are made on this first line. The masterbatch obtained from the first line is cooled during each pass.

The cooled masterbatch obtained from the first line is taken to a second line of the production line 2 in a final pass in the multi-pass sequence. The second line often includes a second internal mixer MI, which is often used in combination with one or more roller tools OC. During this last pass, the vulcanizing system is introduced at the internal mixer MI. The mixing in this last pass is carried out at low temperature (about 90-100°C) before the masterbatch is processed in a batch-off installation BO (downstream of the roller tools OCX), and the processed masterbatch is palletized in a shaping installation MF.

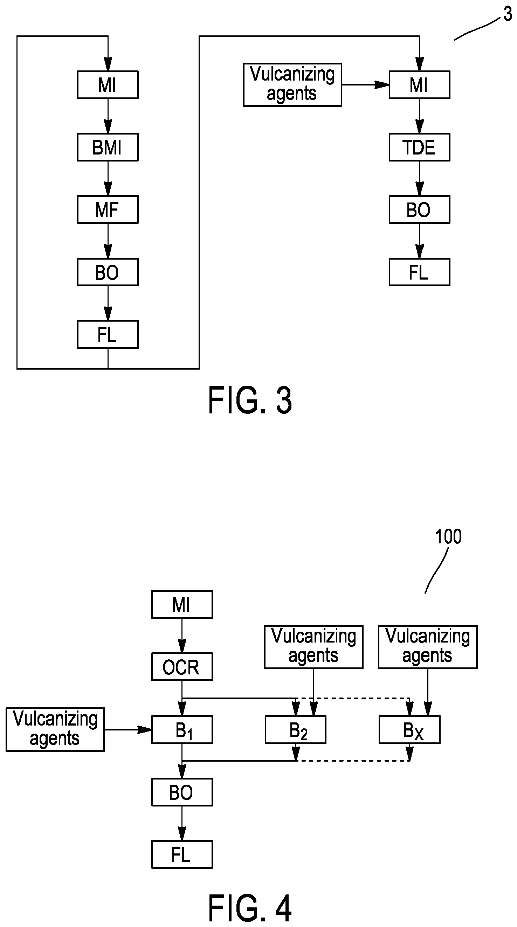

Referring to Figure 3, a production line 3 represents, as an example, another known multi-pass sequence. During multi-pass sequences performed by the production line 3, masterbatches are produced by passing several times over a first line having a "tandem mixer" solution. This solution is realized with an internal mixer MI, downstream of which a second larger internal mixer BMI (or "Big MI") and extruder(s) (e.g., of the type TDE) are located. A traditional batch-off (realized by a batch-off installation BO) associated with a palletizing solution (realized by a shaping installation MF) allows cooling, anti-sticking and palletizing of the masterbatch obtained from the first line.

A second line includes an internal mixer MI with one or more extruders (for example, of the type TDE) and a known end of line installation (a batch-off installation BO and a shaping installation MF that carries out the placement in pallet of the masterbatch obtained from the second line). The last passage is carried out on this second line with the cold recovery of the masterbatch and the introduction of the vulcanizing system into the masterbatch at the internal mixer MI. The mixing cycle is still carried out at low temperature (about 90-100°C).

With machines in current production lines (either single or multi-pass), it is very difficult to produce particular mixtures called "decohesive", and also some sticky mixtures that are problematic on roller tools. Despite this, in the prior art, attempts exist to gain productivity on silica mixtures requiring a significant cycle time for the silanization. For example, European publications EP3359361 and EP3359362 disclose the use of a converging conical twin-screw mixer (including, for example, a machine of the type disclosed by US patent 7,556,419 and proposed by Colmec S.p.A.) downstream of an internal mixer (in some embodiments, this machine can be put in place of a twin-screw extruder).

In fact, the homogenization time of the vulcanizing system on roller tools is often longer than the mixing time of the masterbatch on an internal mixer, or the cooling time of the masterbatch on a roller tool.

With decohesive mixtures, during the passage on the roller tool, the handling of a produced sheet and/or sheath is not regular, generating heterogeneities of mixing and distribution of the vulcanizing system, and of thermal distribution not allowing to reach a commercial quality level of mixtures. For sticky mixtures on open tools, the sheet and/or the sheath is sticky. It is therefore difficult to remove them, and it is also difficult to homogenize and distribute the vulcanization system without altering the quality of the produced mixtures. Thus, with sticky and decohesive mixtures, mixture losses occur that affect the properties of the mixtures produced and increase the risk of mixture loss.

To achieve industrial productivity, the use of a machine with a converging twin screw mixer allows the evacuation and shaping of a rubber mixture. With such a machine, the screws are mounted with movable doors at the end that follow the shape of the screws. Sliding flaps prevent the mixture from escaping from the sides of the two counter-rotating rollers of a roller-nose type system located just downstream of a mixer outlet. Machines incorporating these elements are disclosed by the Applicant in applications FR1902279, FR1902280, FR1902283 and 1902285.

Thus, the disclosed invention relates to the benefits of a conical twin-screw mixer or mixers that are added so as to follow an internal mixer and a roller tool. More particularly, the invention relates to the addition of a twin-screw mixing machine in place of the roller tool to allow the homogenization of the powder vulcanizing system and without risk of product loss. This architecture, being adapted for production lines doing single and multi-pass sequences, is particularly adapted to produce so-called decohesive mixtures and of certain sticky mixtures that pose problems on roller tools. By combining these elements, a mixture is obtained by performing the necessary steps to obtain a good quality of mixture, even with particularly sticky and/or decohesive mixtures.

### SUMMARY OF THE INVENTION

The invention relates to a rubber mixture production line according to claim 1 having an internal mixer that carries out a process of producing a masterbatch from raw materials including at least one elastomeric material, at least one cooling roller tool disposed downstream of the internal mixer that carries out a process of cooling the rubber mixture leaving the internal mixer, a batch-off installation disposed downstream of the cooling roller tool that carries out a process of anti-sticking and cooling the rubber mixture, and an end-of-line installation disposed downstream of the batch-off installation that carries out one or more end-of-line process(es) of the rubber mixture, characterized in that the production line additionally includes at least one twin-screw mixing and extrusion machine, disposed upstream of the batch-off installation and downstream of the cooling roller tool, that carries out a mixing process of the rubber mixture during which vulcanizing agents are added to the cooled rubber mixture leaving the cooling roller tool.

In some embodiments of the production line, the twin-screw mixing and extrusion machine includes:
- a converging conical twin-screw mixer with a fixed frame that supports sleeves in which two screws are mounted at an angle between an opening disposed upstream of the barrels, where a feed hopper of the machine feeds the screws, and an outlet disposed downstream of the barrels, where the mixer discharges the mixture at the end of a mixing cycle ;
- one or more motors that rotate the two screws in the sleeves during the mixing cycle; and
- a movable door or doors provided at the outlet to allow, during the mixing cycle, the discharge and shaping of the rubber mixture;
- a ram that moves along the inside of the feed hopper between an elevated position, where both screws remain accessible to feed the mixture, and a lowered position, where an inner surface of the ram forms a top portion of the mixer; and
- a roller-nose system having two counter-rotating rollers disposed just downstream of the outlet to form a sheet of the mixture exiting the mixer.

In some embodiments of the production line, the twin-screw mixing and extrusion machine further includes a movable sleeve or sleeves that are disposed above and below towards the outlet; and the two screws are mounted in the mixer so that the crests of the threads of each screw engage tangentially the surfaces of the opposite screw so that the screws remain substantially in contact with each other as the screws rotate at an angle and a pitch that allows for self-cleaning.

In some embodiments of the production line, the production line includes at least two twin-screw mixing and extrusion machines that are disposed upstream of the batch-off installation and downstream of the cooling roller tool.

In some embodiments of the production line, the end-of-line installation includes equipment for performing an end-of-line process selected from palletizing and storing the rubber mixture.

The invention also relates to a rubber mixture production line according to claim 6 having a first line that performs a masterbatch production process and a second line that produces a final mixture in a rubber mixing sequence. Each of the first and second lines includes a production line of the disclosed invention incorporating an internal mixer(s) that performs a masterbatch production process, at least one cooling roller tool disposed downstream of the internal mixer that performs a cooling process of the rubber mixture exiting the internal mixer, a batch-off installation disposed downstream of the cooling roller tool that performs an anti-sticking and cooling process of the rubber mixture, and an end-of-line installation, disposed downstream of the batch-off installation, that carries out one or more end-of-line processes on the rubber mixture, with at least one twin-screw mixing and extrusion machine, disposed upstream of the batch-off installation and downstream of the cooling roller tool, that carries out a mixing process on the rubber mixture, during which vulcanizing agents are added to the cooled rubber mixture leaving the cooling roller tool.

The invention also relates to a mixing process according to claim 7 for making a variety of rubber mixtures in a production line of the type disclosed. In one embodiment of the process, the process includes the following steps:
- a step of introducing to the internal mixer the raw materials required to produce the product;
- a step of cooling the mixture leaving the mixer, this step including the step of introducing the mixture leaving the internal mixer to the cooling roller tool
- a step of mixing the cooled mixture produced by the twin-screw mixing machine, this step including the step of introducing the cooled mixture leaving the cooling roller tool into at least one twin-screw mixing machine;
- a step of anti-sticking and cooling the mixture leaving the mixing machine carried out by the batch-off installation; and
- an end-of-line step carried out by the end-of-line installation downstream of the batch-off installation.

In some embodiments of the process of the invention, the end-of-line step includes a step of palletizing the mixture during which the mixture exiting the batch-off installation is deposited on one or more pallets.

In some embodiments of the process of the invention, the step of mixing the cooled mixture includes a step of introducing the vulcanizing products to each twin-screw mixing machine, wherein the vulcanizing products include powder vulcanizing products or block vulcanizing products.

The invention also relates to a mixing process for making a variety of rubber mixtures in a production line of the type incorporating the first line and the second line. In embodiments of the process, the process further includes an end-of-line step performed by the second line, wherein this step includes a step of palletizing the mixture during which the mixture exiting the batch-off installation of the second line is deposited onto a pallet or pallets.

Other aspects of the invention will become apparent from the following detailed description.

### BRIEF DESCRIPTION OF THE DRAWINGS

The nature and various advantages of the invention will become more apparent from the following detailed description, in conjunction with the accompanying drawings, in which the same reference numerals designate identical parts throughout, and in which:
Figure 1 represents a schematic view of a prior art rubber mixture production line making single pass sequences.
Figures 2 and 3 represent schematic views of prior art rubber mixture production lines making multi-pass sequences.
Figure 4 represents a schematic view of an embodiment of a rubber mixture production line of the invention making single pass sequences.
Figure 5 is a perspective view of a mixing and extrusion machine incorporated in the rubber mixture production line of Figure 4.
Figure 6 is a side view, in partial cross section, of the machine of Figure 5 with a converging twin-screw mixer.
Figure 7 is a schematic view of another embodiment of a rubber mixture production line of the invention making single pass sequences.
Figure 8 represents a schematic view of an embodiment of a rubber mixture production line making multi-pass sequences.

### DETAILED DESCRIPTION

Referring now to the figures, in which the same numbers identify identical elements, Figure 4 represents an embodiment of a rubber mixture production line (or "production line") 100 incorporating an internal mixer MI that performs the production of a masterbatch. It is understood that a masterbatch includes a product that is already mixed but does not contain all of the ingredients of the selected mixture recipe. For example, the curing agents are not present in the masterbatch. These ingredients, which make mixing difficult, can be added in the production line 100 downstream of the internal mixer MI to complete the mixing. By "internal mixer" is meant a machine having a ram and two half tanks (or "tanks"), each containing a rotor with one or more vanes (e.g., a Banbury or Intermix type machine for polymers).

The production line 100 also includes a cooling roller tool OCR disposed downstream of the internal mixer MI that performs cooling of the mixture exiting the internal mixer. The cooling roller tool OCR includes a pair of rollers with an adjustable gap between them. Each roller rotates around its own axis of rotation, and they are arranged so that their axes of rotation are parallel to each other and rotate in opposite directions. The rollers may have identical diameters and lengths to ensure consistent and repeatable performance in successive mixing cycles. One or both rollers may have a fluid or other cooling means as is known in the art. The production line 100 passes the rubber mixture exiting the internal mixer MI between the rollers of the cooling roller OCR to form a continuous sheet having a predetermined thickness and width.

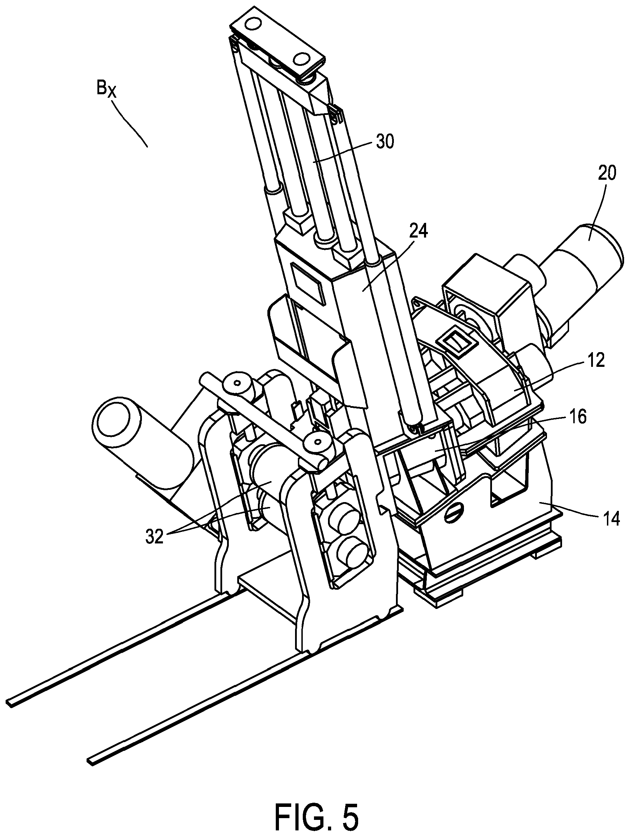

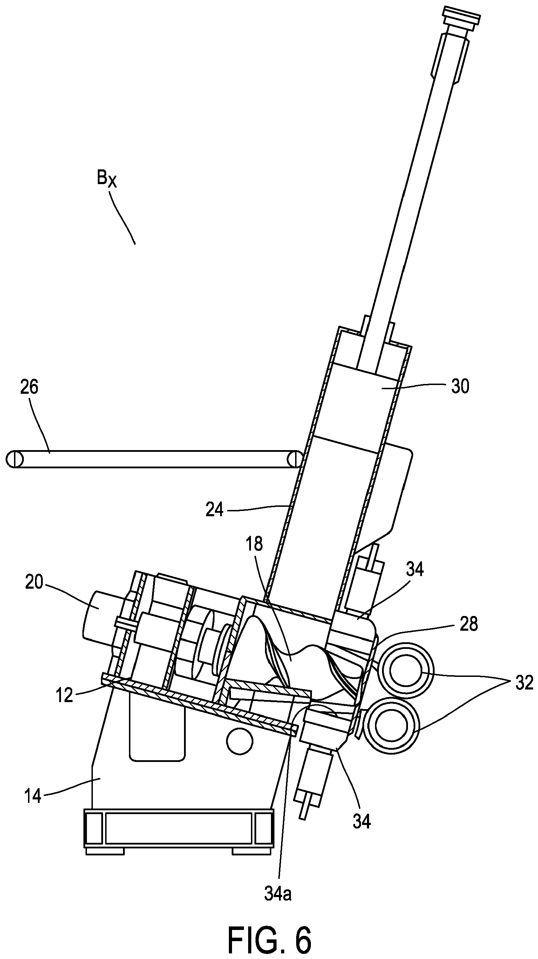

Referring again to Figure 4 and also to Figures 5 and 6, the production line 100 includes at least one twin-screw mixing and extrusion machine (or "twin-screw mixing machine") Bx (where X varies from 1 to N depending on the selected mixture recipe) disposed downstream of the cooling roller tool OCR. The addition of twin-screw mixing machine(s) Bx in place of the homogenizing cylinder tool OCH (as shown in production line 1of Figure 1) allows the vulcanizing system to be homogenized, either in the form of a block of vulcanizing product (or "block") or in powder form, without risk of product loss. As an example, the embodiment shown in Figure 4 includes three twin-screw mixing machines Bx. It is understood that a single twin-screw mixing machine, or two or more twin-screw mixing machines, may be integrated into the production line 100 depending on the selected rubber mixture recipe and its desired properties. As used herein, the terms "the" or "a" "twin screw mixing machine" and "the" or "some" "twin screw mixing machines" are interchangeable.

Referring particularly to Figures 5 and 6, each twin-screw mixing machine Bx includes a converging conical twin-screw mixer (or "mixer") 12 adapted for rubber materials. The mixer 12 includes a stationary frame 14 that supports stationary sleeves (or "sleeves") 16 in which the two screws 18 are mounted. A motor or motors 20 rotate the two screws in the sleeves 16 during a mixing cycle. An upper surface of the fixed frame 14 includes guides (not shown) on which the sleeves 16 (without the screws 18) are capable of translational movement. The mixer 12 is selected from commercially available mixers, including the type disclosed by US patent 7,556,419 and proposed by Colmec S.p.A. In one embodiment, this type of mixer performs mixing and discharging with Archimedes screw type screws.

The screws 18 are mounted in the sleeves 16 at an angle between an opening disposed upstream of the sleeves (where a feed hopper 24 of the twin-screw mixing machine Bx feeds the screws 18), and an outlet disposed downstream of the sleeves (where the mixer 12 discharges the mixture at the end of the mixing cycle). The sleeves 16 may include known cooling channels to manage the temperature of the mixture. The twin-screw mixing machine Bx may include an optional conveyor known in the art (e.g., the belt 26 shown in Figure 4) that serves to introduce the cooled mixture from the cooling roller tool OCR through the feed hopper 24.

The belt 26 also introduces the vulcanization system to the cooled mixture exiting the cooling roller tool OCR. The vulcanizing system incorporates vulcanizing agents (or "vulcanizers") that include, but are not limited to, sulfur and cross-linking or vulcanizing agents. The vulcanizer system can be introduced either as a block (being a mass of vulcanizer) or as a powder (including powder introduced in known hot-melt bags). These vulcanizers are fed directly with the cooled mixture directly to each twin-screw mixing machine Bx (see Figure 4). Thus, the use of twin-screw mixing machine(s) Bx, each being a closed machine, allows the vulcanizing system to be used directly in powder form. The productivity of the production line is thereby improved, as the step of producing and storing the vulcanizing products in block form is no longer mandatory.

In some embodiments, a target temperature of the produced mixture is reached before adding the vulcanizers to the cooled mixture exiting the cooling roller tool OCR. Thus, the mixing cycle times can be shortened while maintaining the beneficial properties of the selected rubber mixture, allowing for optimal productivity.

Referring again to Figures 5 and 6, each twin-screw mixing machine Bx includes at least one movable door 28 that is provided at the outlet of the sleeves 16. The movable door 28 closes the outlet during the mixing cycle. The movable door 28 is opened at the end of the mixing cycle to allow for the discharge and downstream processing of the rubber mixture. As used herein, the terms "the movable door" and "the movable doors" are interchangeable.

In one embodiment of the twin screw mixing machine Bx, the two screws 18 are mounted in the mixer 12 such that the crests of the threads of each screw tangentially contact the surfaces of the opposite screw. In other words, the screws are substantially in contact with each other at an angle and at a pitch that will allow self-cleaning. The screws are said to be "substantially in contact" when the screws can clean themselves by friction, or when the two screws face each other with such a small gap between them that extruded material cannot get stuck on the screw surfaces. The screws are said to rub against each other, or be "self-cleaning," when material carried in the channel of one of the screws will not be able to remain in that channel for more than one revolution of the screw. Consequently, the material undergoes much more movement in the downstream direction, parallel to the axis of the screw, than in a lateral direction, perpendicular to its axis. In this embodiment of the screws 18, the screws are selected from interpenetrating and conjugate profiles, and particularly from co-rotating interpenetrating profiles with conjugate profiles (that are known to be self-cleaning). It is understood that there are several embodiments of the screws 18, including without limitation, of the single-, double-, or triple-threaded type, or of the conjugated double-threaded type. The screws may be selected from screws with one thread or from screws with two, three or four threads. Interpenetrating contra-rotating profiles are also known for mounting and use in the mixer 12. These types of screws and their equivalents are contemplated for use in the mixer 12 depending on the selected rubber mixture recipe and its desired properties.

Referring again to Figures 5 and 6, each twin screw mixing machine Bx includes the two screws 18 and a ram 30 that moves within the feed hopper 24. The ram 30 is similar to rams used in mixing processes performed by Banbury-type internal mixers. As in internal mixers, the ram 30 is used to press the mixture and thereby allow more energy and shear to be imparted to the mixture (see, for example, US Patent 7,404,664 cited above). Guiding of the ram 30 is done between an elevated position (shown in Figure 4), where the two screws 18 remain accessible for introducing the mixture, and a lowered position (not shown), where an inner surface of the ram 30 forms an upper portion of the mixer 12. The ram 30 is guided by slide systems as known on Banbury rams (driven, for example, by cylinders that may be pneumatic, hydraulic or their equivalents).

The ram 30 serves to press the mixture, allowing more energy and shear to be imparted to the mixture. The ram 30 also serves to clean the surfaces of the hopper 24 as it moves downward, removing any pieces of rubber that may stick to it. At the same time, the ram 30 also serves to improve the swallowing of the mixture when it arrives as a masterbatch from the cooling roller tool OCR. The ram 30 forces the mixture to pass quickly between the screws 18 and thus prevents it from stagnating in a block above the screws.

Referring again to Figures 5 and 6, each twin screw mixing machine Bx may include a roller-nose type system. A roller-nose type system includes two counter-rotating rollers 32 disposed just downstream of the outlet to form a sheet of the mixture as it exits the mixer 12. The roller-nose type system may also include an optional control means (not shown) for controlling the speed at which the mixture is fed to the rollers 32. The rotation of the rollers 32 is controlled by the amount of mixture supplied by the mixer 12 (sensed, for example, by a proximity sensor, by a pressure sensor, or by an equivalent device).

In one embodiment of the twin screw mixing machine Bx, the machine further includes one or more mobile sleeves 34 (shown in Figure 4). The mobile sleeves 34 are arranged top-down towards the outlet. It is understood that other known embodiments of the mobile sleeves may be employed (for example, left-right and angled modes). The mobile sleeves 34 include mobile elements for adjusting a predetermined gap between the sleeves 16 and the screws 18. Each mobile sleeve has a bearing surface 34a with a predetermined bearing area based on an elasticity of the mixture. It is understood that the mobile sleeves having bearing surfaces with different areas are interchangeable to ensure the use of the machine without having to replace it. The embodiment shown includes two mobile sleeves 34, but it is understood that a single mobile sleeve (or other equivalent element) or multiple mobile sleeves (or other equivalent elements) may be integrated (for example, into top-bottom mode, left-right mode, angled mode). The mobile sleeves 34 adjust the space between the sleeves and the screws to promote the flow of the mixture within the mixer 12, thus adjusting the duration and degree of mixing of the mixture.

In embodiments of the twin-screw mixing machine Bx incorporating mobile sleeves 34, during a mixing cycle, the two screws 18 circulate the mixture from an upstream side (adjacent to the feed hopper 24) to a downstream side where the mobile sleeves 34 of the twin screw mixing machine Bx are installed. The mobile sleeves 34 are installed relative to the outlet of the mixer 12 so that, in an open position, they allow the flow of mixture to the rollers 32 of the roller-nose type system. The mobile sleeves may move in an alternating or random manner to reduce the gap between the screws and the bearing surface in a random manner, thereby creating downstream-to-upstream, and preferably top or bottom, flows of the mixture). For example, in one embodiment of the twin-screw mixing machine Bx, the mobile sleeves 34 are more likely to be in an open position at the beginning of the mixing cycle when the mixture has a high viscosity (to promote mixing flow), and are more likely to be in a closed position at the end of the mixing cycle when the mixture has a lower viscosity (to promote mixing). The guiding of the mobile sleeves 34 is done by known systems (driven, for example, by cylinders that can be pneumatic, hydraulic or their equivalents). The linear movement of the mobile sleeves 34 is managed by the amount of mixing provided by the mixer 12 (detected, for example, by a proximity sensor, by a pressure sensor or by an equivalent device).

In one embodiment of the twin-screw mixing machine Bx, the movable doors may be sliding shutters (not shown) that are interposed between the rollers 32 and a front face of the mobile sleeves 34. The sliding shutters include movable elements for adjusting the flow of the mixture exiting the mixer 12. In an open position, the sliding shutters serve as "ears" for the rollers 32 that prevent the mixture from escaping from the sides of the rollers 32. Thus, the mixture is forced to pass between the two rollers and will be calendered in the form of a thin sheet of a predefined width by the opening of the sliding shutters.

Referring again to Figure 4, the production line 100 further includes a batch-off installation BO disposed downstream of the twin-screw mixing machine Bx. The batch-off installation BO includes equipment for carrying out an anti-sticking and cooling process of the mixture as known by the skilled person. The batch-off installation BO is of the type commercially available and described above with respect to the production lines 1, 2 and 3 of the respective figures 1, 2 and 3.

Referring again to Figure 4, the production line 100 further includes an end-of-line installation FL disposed downstream of the batch-off installation BO. The end-of-line installation includes equipment for performing an end-of-line process or processes of the mixture. The end-of-line installation FL is of the type commercially available and described above with respect to the production line 1 of FIG. 1. In one embodiment of the production line 100, the end-of-line installation FL performs a palletization process of the mixture during which the mixture exiting the batch-off installation BO is deposited on one or more pallets at a time. The palletized mixture is thus shaped for transport and storage prior to its use in the production of finished products (e.g., tires).

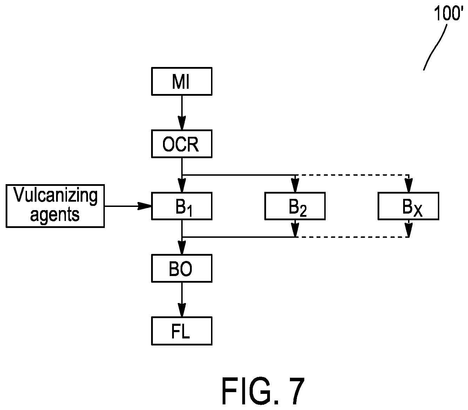

Referring also to Figure 7, another embodiment of the production line 100 is shown. In this embodiment, the vulcanizers, and particularly the powdered vulcanizers in hot-melt bags, are put directly onto a sheet of the mixture at the outlet of the cooling roller tool OCR (e.g., during a process as disclosed by Applicant's patent EP2707189). It is understood that the mixture is cooled sufficiently to avoid melting the hot-melt bag.

Referring again to FIGS. 4-6, a detailed description is given as an example of a mixing process of the invention. It is understood that the process can be easily adapted for any embodiment of the twin-screw mixing machine Bx.

In initiating a mixing process of the invention, the mixing process includes a step of introducing to the internal mixer MI the raw materials required to make the product. The raw materials fed to the internal mixer MI include, without limitation, at least one elastomeric material (e.g., natural rubber, synthetic elastomer, and combinations and equivalents thereof) and one or more ingredients, such as one or more processing agents, protective agents, and reinforcing fillers. The raw materials may also include one or more other ingredients such as carbon black, silica, oils, and resins. All of the raw materials are fed to the internal MI mixer in varying amounts depending on the desired performance of the resulting products of the mixing processes (e.g., tires).

The mixing process further includes a step of cooling the mixture leaving the internal mixer MI in the form of a masterbatch. The cooling step includes a step of introducing the mixture leaving the internal mixer MI to the cooling roller tool OCR. During this step, the production line 100 circulates the mixture between the rolls of the cooling roller tool OCR to lower its temperature. As an example, the mixture exiting the internal mixer MI may reach a temperature of approximately 170° before it arrives at the cooling roller tool OCR. At the end of the circulation, this temperature may reach about 80°C.

The mixing process further includes a step of mixing the cooled mixture that is carried out by the twin-screw mixing machine. This step includes a step of feeding the cooled mixture from the cooling roller tool OCR to the twin-screw mixing machine B1. During this step, the cooled mixture is introduced into the twin-screw mixing machine Bx (e.g., through the belt 26 in Figure 4). During this step, the screws 18 continue to rotate and the movable doors 28 remain closed. The ram 30 remains in its elevated position during this step, and the rollers 32 remain on standby during this step. In embodiments of the twin-screw mixing machine Bx including mobile sleeves 34, the mobile sleeves remain in their open position (i.e., with a gap between the sleeves and the screws at maximum) during this step.

The step of mixing the cooled mixture further includes a step of introducing the necessary vulcanizing materials to the twin-screw mixing machine Bx. In embodiments of the production line 100 shown in Figure 4, during this step, the vulcanizing products may be directly introduced into the feed hopper 24, including powder vulcanizing products. In embodiments of the production line 100 shown in Figure 7, the vulcanizing products may be directly introduced into the sheet of the mixture at the outlet of the cooling roller tool OCR.

It is understood that the introduction of the cooled mixture and vulcanizing products to the mixing machine may be performed either at the same time or in a staggered manner depending on the selected rubber mixture recipe, without loss of the powdered vulcanizing products. In embodiments of the production line 100 incorporating two or more twin-screw mixing machines, a portion of the cooled mixture may be introduced in the same manner to each twin-screw mixing machine together with assigned vulcanizing products. It is understood that one or more twin-screw mixing machines Bx may perform the mixing step of the cooled mixture, and other twin-screw mixing machines Bx may remain on standby. In this manner, the cooled mixture or a portion thereof can be directed to the standby twin-screw mixing machine(s) to ensure high productivity.

During the step of mixing the cooled mixture effected by the twin-screw mixing machine Bx, the screws 18 are rotated forward with the movable doors 28 closed. During this step, the rotating screws cause the mixture to move downstream of the mixer as soon as the mixture (or raw materials) is introduced into the twin-screw mixing machine. In any embodiment of the twin-screw mixing machine Bx, the speed of rotation may be variable during the cycle. When the screws 18 are interpenetrated, the rotational speed of the two screws is synchronized.

During the step of mixing the cooled mixture performed by the twin-screw mixing machine Bx, the ram 30 descends after the step of introducing the cooled mixture and the vulcanizing products into it. During this step, the screws 18 continue to rotate during this step, and the rollers 32 remain on standby.

During the step of mixing the cooled mixture performed by the twin-screw mixing machine Bx, after the ram 30 is lowered, the screws 18 are rotated in reverse with the movable doors 28 closed. During this step, the screws rotate in the direction opposite to the forward rotation step of the screws. The entire mixture located in the twin-screw mixing machine Bx has a downstream-to-upstream movement of the machine that will cause additional distribution of raw materials.

In embodiments of the twin-screw mixing machine Bx having mobile sleeves 34, during the step of mixing the cooled mixture effected by the twin-screw mixing machine Bx, the ram 30 is elevated, and the screws 18 are rotated forward with the movable doors 28 closed. The mobile sleeves 34 are completely closed, either by simultaneous closure or by alternate closure of the movable elements. The rollers 32 remain on standby.

During the step of mixing the cooled mixture effected by the twin-screw mixing machine Bx, the emptying of this machine is performed. To perform the emptying of the twin-screw mixing machine, the movable doors 28 open to permit the exit of the mixture from the outlet toward a process downstream of the twin-screw mixing machine. In embodiments of the twin-screw mixing machine Bx where the movable doors include two or more movable elements, the movable elements open either simultaneously or alternately. During emptying, the ram 30 is lowered during this step, and the rollers 32 are rotated to allow the mixture to be discharged in sheets. In embodiments of the twin-screw mixing machine Bx further including mobile sleeves 34, the mobile sleeves remain fully closed, but can be adjusted based on a volume of the mixture exiting the mixer. The screws 18 continue to rotate to completely empty the twin-screw mixing machine Bx.

At the end of the step of mixing the cooled mixture effected by the twin-screw mixing machine Bx, the rubber mixture is finished mixing. After the end of emptying the twin-screw mixing machine Bx, the mixing step can be restarted. It is understood that this step can be performed in an iterative manner depending on the selected mixture recipe. Due to the self-cleaning of the screws 18, all types of mixtures, including sticky and de-cohesive mixtures, are thus completely removed from the machine. It is also envisaged that the twin-screw mixing machine Bx can carry out a process or processes concerning the plasticization of natural elastomers.

The mixing process also includes a step of anti-sticking and cooling of the mixture leaving the mixing machine Bx. This step is carried out by the batch-off installation BO disposed downstream of the twin-screw mixing machine Bx. In some embodiments of the mixing process, a target temperature of the cooled mixture is reached after this step.

The mixing process further includes a final end-of-line step that is performed by the end-of-line installation FL downstream of the batch-off installation BO. In some embodiments of the mixing process, this step includes a step of palletizing the mixture during which the mixture exiting the batch-off installation BO is deposited on one or more pallets at a time. In some embodiments of the mixing process, this step may further include at least one step of storing the rubber mixture.

It is understood that one or more steps of the mixing process of the invention may be performed in an iterative manner depending on the selected mixture recipe.

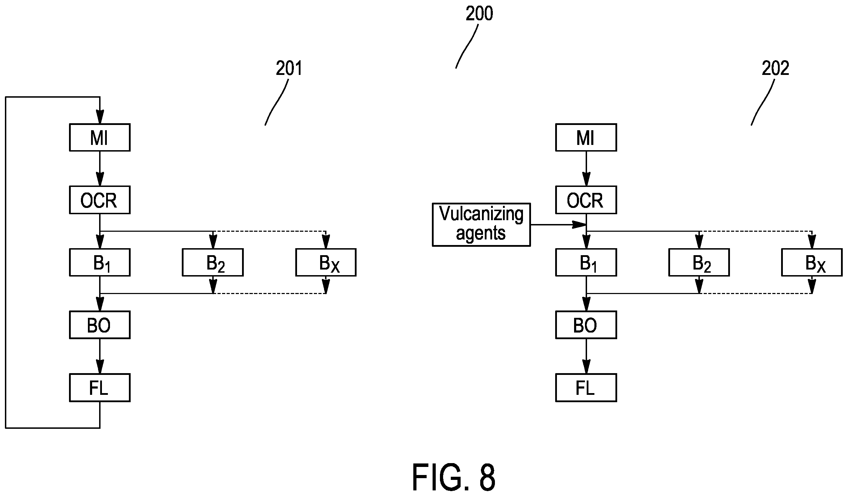

Referring also to Figure 8, Figure 8 represents an embodiment of a rubber production line (or "production line") 200 that effects multi-pass sequences. The line 200 includes two lines including a first masterbatch line (or "first line") 201 and a second final mix line (or "final mix") 202. The first line 201 incorporates one or more internal mixers MI that perform the production of a masterbatch as described above. The first line 201 also includes one or more cooling roller tools OCR disposed downstream of the internal mixer MI that perform cooling of the mixture exiting the internal mixer. The production line 200 passes the rubber mixture exiting the internal mixer MI between the rollers of the cooling roller tool OCR to form a continuous sheet having a predetermined thickness and width.

Referring again to Figure 8, the first line 201 of the production line 200 includes at least one twin-screw mixing and extrusion machine Bx as described above with respect to Figures 4-7 (as used herein, the terms "the" or "a" "twin-screw mixing machine" and "the" or "some" "twin-screw mixing machines" are interchangeable). The twin-screw mixing machine Bx (where X varies from 1 to N depending on the mixing recipe selected) is disposed downstream of the cooling roller tool OCR.

The first line 201 of the production line 200 further includes a batch-off installation BO disposed downstream of the twin-screw mixing machine Bx. The first line 201 of the production line 200 further includes an end-of-line installation FL disposed downstream of the batch-off installation BO. The batch-off BO and end-of-line FL installations are selected from the commercially available types described above.

The second line 202 of the production line 200 includes an architecture substantially identical to either the architecture of the production line 100 of Figure 4 or the architecture of the production line 100' of Figure 7 (the latter being shown in Figure 8).

As an example, the embodiment shown in Figure 8 includes three twin-screw mixing machines Bx installed in each of the first and second lines 201, 202. It is understood that a single twin-screw mixing machine, or two or more twin-screw mixing machines, may be integrated into each line 201, 202 of the production line 200 depending on the selected rubber mixture recipe and its desired properties.

In an embodiment of a mixing process of the invention performed by the production line 200, the process includes a step of performing the above-described mixing process with respect to the production lines 100, 100' except for the step of introducing the vulcanizing products to each twin-screw mixing machine Bx. This step is performed by the first line 201. The process of the invention carried out by the production line 200 also includes a step of introducing the vulcanizing products to each twin-screw mixing machine Bx. This step is performed by the second line 202 after the end of the process performed by the first line 201. During this step, the vulcanizing products fed to each twin-screw mixing machine Bx include powder vulcanizing products or block vulcanizing products. In one embodiment of the process, the production line 200 makes multiple successive passes through at least some of the equipment on the first line 201 before a final pass through the second line 202.

During multi-pass sequences, the first line 201 produces masterbatches that are cold worked on the second line 202. The equivalent steps described above with respect to the process performed by the production lines 100, 100' are performed in the same manner in the process performed by the production line 200. It is conceivable that a single production line 200 may be used to perform both the masterbatch production process and the vulcanizer addition process.

The mixing processes of the invention may be done by PLC control and may include pre-programming of management information. For example, a process setting may be associated with the properties of the cooled mixture that is supplied to the twin-screw mixing machine Bx, including the properties of the cooling roller tool OCR and the screws 18, the properties of the cooled mixture and/or the vulcanizers entering the hopper 24, and the properties of the mixture exiting the twin-screw mixing machine Bx.

In all embodiments, a monitoring system could be implemented in any part of the production line 100. At least a portion of the monitoring system may be provided in a wearable device such as a mobile network device (e.g., a cell phone, a laptop computer, a camera, a network-connected wearable device(s) (including "augmented reality" and/or "virtual reality" devices, network-connected wearables, and/or any combinations and/or equivalents)).

In some embodiments of the invention, the production line 100 (and/or a rubber production facility that incorporates the production line 100) may receive voice commands or other audio data (representing, for example, a start or a stop of the mixing process if the intended properties of the mixture are not achieved). The request may include a request for the current state of a mixing process. A generated response may be represented audibly, visually, tactilely (e.g., using a haptic interface) and/or virtually and/or by augmented means.

In an embodiment, the process of the invention may include a step of training the production line 100 (or training a rubber production facility that incorporates the production line 100), including training the twin-screw mixing machine Bx, to recognize values representative of the mixture exiting the production line (e.g., temperature and viscosity values) and to make a comparison with target values. This step may include a step of training the production line 100 to recognize non-equivalences between the compared values. Each training step may include a classification generated by self-learning means. This classification may include, without limitation, the raw material and masterbatch parameters of the selected rubber mixture recipe, the configurations of the self-cleaning screws, the durations of the mixing cycles including the mixing process of the invention, and the expected values at the end of a mixing cycle in progress. It is conceivable that detection and comparison steps may be performed iteratively. In embodiments of the process of the invention, the data obtained may feed a neural network(s) that manages the production line(s) 100, 100', 200 and/or a facility(ies) and/or system(s) in which the production line(s) 100, 100', 200 are incorporated.

The production line 100 incorporating the twin-screw mixing machine Bx can homogenize, process and cool rubber mixtures allowing for operation with sticky and/or decohesive mixtures in an industrial manner. The term "decohesive" refers to a mixture that, in industrial use in a shaping process, has a raw mechanical strength below the imposed elongation forces. This results in tearing of the material and generates industrial difficulties (e.g., loss of material, decreased mixing efficiency, and irregularity of machine supply due to sheet breakage). Factors that influence the level of decohesion include, but are not limited to, polymer characteristics (e.g., chemistry (SBR, IR, BR, NR), functionalization, macrostructure and microstructure), mixture characteristics (e.g., volume fraction of filler and plasticizer and level of processing agents), and the existence of an equilibrium between the adhesion of the mixture to the processing tools and their internal cohesive energy.

The term "tackiness" defines a property of a rubber mixture that varies between mixture formulations. Below are described the formulation parameters influencing the tackiness of mixtures on industrial processes.

### EXAMPLE

Considering the level of mixture tackiness in production sites, the properties of a composition of a mixture influence this level, including:
- The ratio of the reinforcing filler ratio and the plasticizer ratio, with this ratio indicating a stickier mixture as the ratio is lowered.
- The ratio of resin in the mixture, with this ratio indicating a stickier mixture as the ratio increases.
- The volume fraction of elastomer, which indicates a stickier mixture as the volume fraction decreases.

Also considered is the characteristic of the elastomer that may be part of the tackiness component of the mixtures. In this example, a Mooney ML1+4 100°C dry elastomer <50 points, or the presence of isoprene is considered. Mooney, also known as viscosity or plasticity, characterizes, in a known way, solid substances. An oscillating consistometer as described in ASTM D1646 standard (1999) is used. This plasticity measurement is carried out according to the following principle: the sample analyzed in its raw state (i.e., before curing) is molded (formed) in a cylindrical chamber heated to a given temperature (e.g., 35°C or 100°C). After one minute of preheating, the rotor rotates within the specimen at 2 rpm and the torque required to maintain this motion is measured during 4 minutes of rotation. The Mooney viscosity (ML 1 + 4) is expressed in "Mooney units" (with 1UM=0.83 Nm) and corresponds to the value obtained at the end of the 4 minutes

A very sticky mixture is not necessarily an "extreme" mixture on one of the criteria, but it is the combination of all the criteria that gives its stickiness and therefore its difficulty of realization. By multiplying these criteria, a "sticky index" is found and represented by the table below:

**TABLE 1**

| **1 - Ratio Carbon black/plasticizer** | | | | | | | | | | | |
|---|---|---|---|---|---|---|---|---|---|---|---|
| **Carbon black/Plasticizer index** | **150.38** | **140.30** | **130.23** | **120.15** | **110.08** | **100.00** | **89.92** | **79.85** | **69.77** | **59.70** | **49.62** |
| **Severity value** | **1** | **1.10** | **1.20** | **1.30** | **1.40** | **1.50** | **1.60** | **1.70** | **1.80** | **1.90** | **2.00** |
| | | | | | | | | | | | |

| **2 - Resin presence** | | | | | | | | | | | |
|---|---|---|---|---|---|---|---|---|---|---|---|
| **Resin stickiness index** | **0.00** | **20.00** | **40.00** | **60.00** | **80.00** | **100.00** | **120.00** | **140.00** | **160.00** | **180.00** | **200.00** |
| **Severity value** | **1** | **1.10** | **1.20** | **1.30** | **1.40** | **1.50** | **1.60** | **1.70** | **1.80** | **1.90** | **2.00** |
| | | | | | | | | | | | |

| **3 - Mixture cohesion** | | | | | | | | | | | |
|---|---|---|---|---|---|---|---|---|---|---|---|
| **Volume fraction of elastomer index** | **143** | **134** | **126** | **117** | **109** | **100** | **91** | **83** | **74** | **66** | **57** |
| **Severity value** | **1** | **1.10** | **1.20** | **1.30** | **1.40** | **1.50** | **1.60** | **1.70** | **1.80** | **1.90** | **2.00** |

In an empirical way and according to different criteria of industrial feasibility, an assessment is made on the industrial feasibility of several mixtures. The limit of feasibility is established for sticky indices above 3.5 and 4.5 points.

### Examples of mixtures:

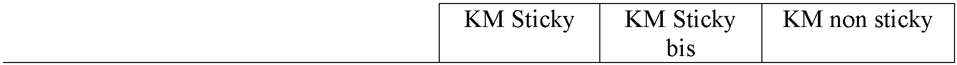

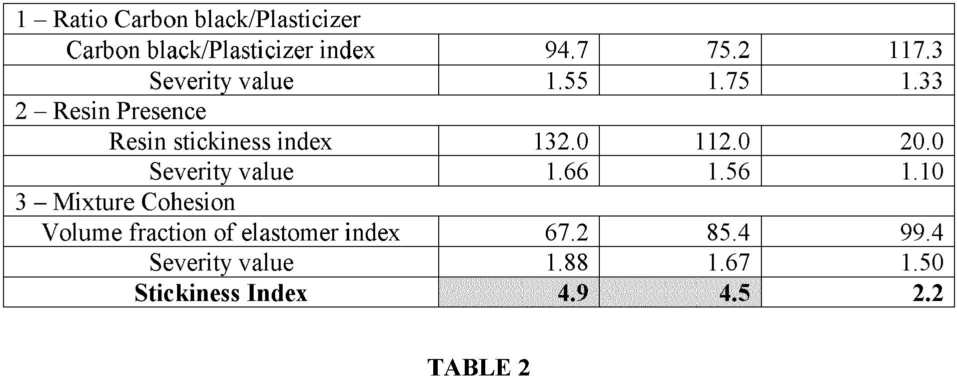

The two mixtures "KM sticky" and "KM sticky bis", with respective indexes 4.9 and 4.5, are not considered to have a satisfactory industrial feasibility. However, the machine of the invention allows these mixtures to be made industrially with a higher productivity compared to conventional machines of the internal mixer or external mixer type.

In order to obtain the mixtures with the desired properties in shorter cycles, the invention preserves all the advantages of a production line incorporating single pass sequences. At the same time, the invention combines the solutions of converging twin-screw mixers. Thus, a single production line is provided that is capable of handling a variety of mixtures, including sticky and decohesive mixtures, without changing equipment in a mixing facility.

The terms "at least one" and "one or more" are used interchangeably. Ranges that are presented as being "between a and b" include both "a" and "b" values.

## Claims

1. A production line (100, 100') for a rubber mixture comprising an internal mixer (MI) that carries out a process of producing a masterbatch from raw materials comprising at least one elastomeric material, at least one cooling roller tool (OCR) disposed downstream of the internal mixer (MI) that carries out a process of cooling the rubber mixture leaving the internal mixer (MI), a batch-off installation (BO) disposed downstream of the cooling roller tool (OCR) that carries out an anti-sticking and cooling process of the rubber mixture, and an end-of-line installation (FL) disposed downstream of the batch-off installation (BO) that carries out one or more end-of-line processes of the rubber mixture, **characterized in that** the production line (100, 100') further comprises:
at least one twin-screw mixing and extrusion machine (Bx) that is disposed upstream of the batch-off installation (BO) and downstream of the cooling roller tool (OCR) and that carries out a mixing process of the rubber mixture, during which vulcanizing agents are added to the cooled rubber mixture leaving the cooling roller tool (OCR).

2. The production line of claim 1, wherein the twin-screw mixing and extrusion machine (Bx) comprises:
- a converging twin-screw mixer (12) with a fixed frame (14) that supports sleeves (16, 16') in which two screws (18) are mounted at an angle between an opening disposed upstream of the sleeves, where a feed hopper (24) of the machine (10) feeds the screws, and an outlet disposed downstream of the sleeves, where the mixer (12) discharges the mixture at the end of a mixing cycle ;
- one or more motors (20) that rotate the two screws in the sleeves during the mixing cycle; and
- one or more movable doors (28, 28') provided at the outlet to allow, during the mixing cycle, the discharge and shaping of the rubber mixture;
- a ram (30) that moves along the inside of the feed hopper (24) between an elevated position, where both screws remain accessible for feeding the mix, and a lowered position, where an inner surface of the ram forms an upper portion of the mixer (12); and
- a roller-nose system comprising two counter-rotating rollers (32) disposed just downstream of the outlet to form a sheet of the mixture exiting the mixer (12).

3. The production line of claim 2, wherein:
- the twin screw mixing and extrusion machine (Bx) further comprises a mobile sleeve or sleeves (34) that are disposed toward the outlet in a top-down arrangement; and
- the two screws (18) are mounted in the mixer (12) such that the crests of the threads of each screw tangentially contact the surfaces of the opposite screw so that the screws remain substantially in contact with each other upon rotation of the screws at an angle and at a pitch that allows self-cleaning.

4. The production line of any one of the preceding claims, comprising at least two twin-screw mixing and extrusion machines (Bx) that are disposed upstream of the batch-off installation (BO) and downstream of the cooling roll tool (OCR).

5. The production line of any one of the preceding claims, wherein the end-of-line installation (FL) comprises equipment(s) for performing an end-of-line process selected from palletizing and storing the rubber mixture.

6. A rubber mixture production line (200) comprising a first line (201) that performs a masterbatch production process and a second line (202) that produces a final mixture in a rubber mixing sequence, wherein each of the first and second lines comprises a production line of any one of claims 1 to 5.

7. A mixing process for making a variety of rubber mixtures in a production line of the type of any of claims 1 to 5, the process comprising the following steps:
- a step of introducing to the internal mixer (MI) the raw materials required to make the product;
- a step of cooling the mixture leaving the internal mixer (MI), this step comprising the step of introducing the mixture leaving the internal mixer (MI) to the cooling roller tool (OCR);
- a step of mixing the cooled mixture carried out by the twin-screw mixing and extrusion machine (Bx), this step comprising the step of introducing the cooled mixture leaving the cooling roller tool (OCR) into at least one twin-screw mixing machine;
- a step of anti-sticking and cooling the mixture leaving the twin-screw mixing and extrusion machine (Bx) carried out by the batch-off installation (BO); and
- an end-of-line step carried out by the end-of-line installation (FL) downstream of the batch-off installation BO.

8. The process of claim 7, wherein the end-of-line step comprises a step of palletizing the mixture during which the mixture exiting the batch-off installation (BO) is deposited on one or more pallets.

9. The process of claims 7 or claim 8, wherein the step of mixing the cooled mixture comprises a step of introducing the vulcanizing products to each twin-screw mixing and extrusion machine (Bx), and wherein the vulcanizing products comprise powder vulcanizing products or block vulcanizing products.

10. A mixing process for making a variety of rubber mixtures in a production line of the type of claim 6, comprising the following steps:
- a step of performing the process of claim 7 or claim 8 by the first line (201), wherein the first line performs the process at least once; and
- a step of performing the process of claim 9 by the second line (202), wherein the second line performs such process after completion of the process performed by the first line (201).

11. The process of claim 10, further comprising an end-of-line step performed by the second line (202), wherein this step comprises the step of palletizing the mixture during which the mixture exiting the batch-off installation (BO) of the second line (202) is deposited on a pallet or pallets.

## Patentansprüche

1. Produktionslinie (100, 100') für eine Kautschukmischung, umfassend einen internen Mischer (MI), der einen Vorgang zur Herstellung eines Masterbatch aus Rohmaterialien ausführt, die mindestens ein elastomeres Material umfassen, mindestens ein Kühlwalzenwerkzeug (OCR), das stromabwärts des internen Mischers (MI) angeordnet ist und einen Vorgang des Kühlens der aus dem internen Mischer (MI) austretenden Kautschukmischung ausführt, eine Batch-Off-Anlage (BO), die stromabwärts des Kühlwalzenwerkzeugs (OCR) angeordnet ist und einen Antihaft- und Kühlvorgang der Kautschukmischung ausführt, und eine Linienendanlage (FL), die stromabwärts der Batch-Off-Anlage (BO) angeordnet ist und einen oder mehrere Linienendvorgang/- vorgänge der Kautschukmischung ausführt, **dadurch gekennzeichnet, dass** die Produktionslinie (100, 100') ferner Folgendes umfasst:
mindestens eine Zweischneckenmisch- und - extrusionsmaschine (Bx), die stromaufwärts der Batch-Off-Anlage (BO) und stromabwärts des Kühlwalzenwerkzeugs (OCR) angeordnet ist und die einen Mischvorgang der Kautschukmischung ausführt, bei dem der aus dem Kühlwalzenwerkzeug (OCR) austretenden gekühlten Kautschukmischung Vulkanisationsmittel zugesetzt werden.

2. Produktionslinie nach Anspruch 1, wobei die Zweischneckenmisch- und -extrusionsmaschine (Bx) Folgendes umfasst:
- einen konvergierenden Zweischneckenmischer (12) mit einem festen Rahmen (14), der Muffen (16, 16') trägt, in denen zwei Schnecken (18) schräg zwischen einer stromaufwärts der Muffen angeordneten Öffnung, in der ein Einfülltrichter (24) der Maschine (10) die Schnecken beschickt, und einem stromabwärts der Muffen angeordneten Auslass, in dem der Mischer (12) die Mischung am Ende eines Mischzyklus ausstößt, montiert sind;
- einen oder mehrere Motoren (20), die die zwei Schnecken in den Muffen während des Mischzyklus drehen; und
- eine oder mehrere bewegbare Türen (28, 28'), die an dem Auslass vorgesehen sind, um während des Mischzyklus das Ausstoßen und Formen der Kautschukmischung zu ermöglichen;
- einen Stößel (30), der sich entlang der Innenseite des Einfülltrichters (24) zwischen einer angehobenen Position, in der beide Schnecken für die Zufuhr der Mischung zugänglich bleiben, und einer abgesenkten Position, in der eine Innenfläche des Stößels einen oberen Teil des Mischers (12) bildet, bewegt; und
- ein Walzennasensystem, das zwei gegenläufige Walzen (32) umfasst, die unmittelbar stromabwärts des Auslasses angeordnet sind, um eine Schicht der aus dem Mischer (12) austretenden Mischung zu bilden.

3. Produktionslinie nach Anspruch 2, wobei:
- die Zweischneckenmisch- und -extrusionsmaschine (Bx) ferner (eine) bewegliche Hülse oder Hülsen (34) umfasst, die hin zu dem Auslass in einer Anordnung von oben nach unten angeordnet ist/sind; und
- die zwei Schnecken (18) in dem Mischer (12) so montiert sind, dass die Gewindespitzen jeder Schnecke die Oberflächen der gegenüberliegenden Schnecke tangential berühren, sodass die Schnecken bei einer Drehung der Schnecken in einem Winkel und mit einer Steigung, die eine Selbstreinigung ermöglichen, im Wesentlichen in Kontakt miteinander bleiben.

4. Produktionslinie nach einem der vorhergehenden Ansprüche, umfassend mindestens zwei Zweischneckenmischund -extrusionsmaschinen (Bx), die stromaufwärts der Batch-Off-Anlage (BO) und stromabwärts des Kühlwalzenwerkzeugs (OCR) angeordnet sind.

5. Produktionslinie nach einem der vorhergehenden Ansprüche, wobei die Linienendanlage (FL) Ausrüstung(en) zum Durchführen eines Linienendvorgangs, ausgewählt aus dem Palettieren und dem Lagern der Kautschukmischung, umfasst.

6. Kautschukmischungsproduktionslinie (200), umfassend eine erste Linie (201), die einen Masterbatchherstellungsvorgang durchführt, und eine zweite Linie (202), die eine finale Mischung in einer Kautschukmischabfolge herstellt, wobei jede der ersten und zweiten Linie eine Produktionslinie nach einem der Ansprüche 1 bis 5 umfasst.

7. Mischverfahren zur Herstellung einer Vielzahl von Kautschukmischungen in einer Produktionslinie nach einem der Ansprüche 1 bis 5, wobei das Verfahren die folgenden Schritte umfasst:
- einen Schritt des Einbringens der für die Herstellung des Produkts erforderlichen Rohmaterialien in den internen Mischer (MI);
- einen Schritt des Kühlens der aus dem internen Mischer (MI) austretenden Mischung, wobei dieser Schritt den Schritt des Einbringens der aus dem internen Mischer (MI) austretenden Mischung in das Kühlwalzenwerkzeug (OCR) umfasst;
- einen Schritt des Mischens der gekühlten Mischung, der durch die Zweischneckenmisch- undextrusionsmaschine (Bx) ausgeführt wird, wobei dieser Schritt den Schritt des Einbringens der aus dem Kühlwalzenwerkzeug (OCR) austretenden gekühlten Mischung in mindestens eine Zweischneckenmischmaschine umfasst;
- einen Schritt des Verhinderns des Anhaftens und des Kühlens der aus der Zweischneckenmisch- und - extrusionsmaschine (Bx) austretenden Mischung, der durch die Batch-Off-Anlage (BO) ausgeführt wird; und
- einen Linienendschritt, der durch die Linienendanlage (FL) stromabwärts der Batch-Off-Anlage (BO) ausgeführt wird.

8. Verfahren nach Anspruch 7, wobei der Linienendschritt einen Schritt des Palettierens der Mischung umfasst, bei dem die aus der Batch-Off-Anlage (BO) austretende Mischung auf eine oder mehrere Paletten abgelegt wird.

9. Verfahren nach Anspruch 7 oder Anspruch 8, wobei der Schritt des Mischens der gekühlten Mischung einen Schritt des Einbringens der Vulkanisationsprodukte in jede Zweischneckenmisch- und -extrusionsmaschine (Bx) umfasst und wobei die Vulkanisationsprodukte Pulver-Vulkanisationsprodukte oder Block-Vulkanisationsprodukte umfassen.

10. Mischverfahren zur Herstellung einer Vielzahl von Kautschukmischungen in einer Produktionslinie nach Anspruch 6, die folgenden Schritte umfassend:
- einen Schritt des Durchführens des Verfahrens nach Anspruch 7 oder Anspruch 8 durch die erste Linie (201), wobei die erste Linie das Verfahren mindestens einmal durchführt; und
- einen Schritt des Durchführens des Verfahrens nach Anspruch 9 durch die zweite Linie (202), wobei die zweite Linie dieses Verfahren nach dem Abschluss des durch die erste Linie (201) durchgeführten Verfahrens durchführt.

11. Verfahren nach Anspruch 10, ferner umfassend einen Linienendschritt, der durch die zweite Linie (202) durchgeführt wird, wobei dieser Schritt den Schritt des Palettierens der Mischung umfasst, bei dem die aus der Batch-Off-Anlage (BO) der zweiten Linie (202) austretende Mischung auf eine Palette oder Paletten abgelegt wird.

## Revendications

1. Une ligne de fabrication (100, 100') d'un mélange de caoutchouc comprenant un mélangeur interne (MI) qui réalise un processus de fabrication d'un mélange maître à partir des matières premières comprenant au moins un matériau élastomère, au moins un outil à cylindres refroidisseur (OCR) disposé en aval du mélangeur interne (MI) qui réalise un processus de refroidissement du mélange de caoutchouc sortant du mélangeur interne (MI), une installation de batch-off (BO) disposée en aval de l'outil à cylindres refroidisseur (OCR) qui réalise un processus d'anticollage et refroidissement du mélange de caoutchouc, et une installation de fin de ligne (FL) disposée en aval de l'installation de batch-off (BO) qui réalise un ou des processus de fin de ligne du mélange de caoutchouc, **caractérisée en ce que** la ligne de fabrication (100, 100') comprend en outre :
au moins une machine de mélangeage et d'extrusion bi-vis (Bx), disposée en amont de l'installation de batch-off (BO) et en aval de l'outil à cylindre refroidisseur (OCR), qui réalise un processus de mélangeage du mélange de caoutchouc pendant lequel des produits vulcanisants sont ajoutés au mélange de caoutchouc refroidi sortant de l'outil à cylindres refroidisseur (OCR).

2. La ligne de fabrication de la revendication 1, dans laquelle la machine de mélangeage et d'extrusion bi-vis (Bx) comprend :
- un mélangeur à bi-vis conique convergente (12) avec un châssis fixe (14) qui soutient des fourreaux (16, 16') dans lequel deux vis (18) sont montées de manière inclinée entre une ouverture disposée en amont des fourreaux, où une trémie d'introduction (24) de la machine (10) alimente les vis, et une sortie disposée en aval des fourreaux, où le mélangeur (12) fait sortir le mélange à la fin d'un cycle de mélangeage ;
- un ou des moteurs (20) qui réalise la rotation des deux vis dans les fourreaux pendant le cycle de mélangeage ; et
- une ou des portes amovibles (28, 28') fournies à la sortie pour permettre, pendant le cycle de mélangeage, l'évacuation et la mise en forme du mélange de caoutchouc ;
- un pilon (30) qui se déplace le long de l'intérieur de la trémie d'introduction (24) entre une position élevée, où les deux vis restent accessibles pour introduire le mélange, et une position baissée, où une surface intérieure du pilon forme une partie supérieure du mélangeur (12) ; et
- un système de type nez à rouleaux comprenant deux rouleaux contrarotatifs (32) disposés juste en aval de la sortie pour former une nappe du mélange sortant du mélangeur (12).

3. La ligne de fabrication de la revendication 2, dans laquelle :
- la machine de mélange bi-vis (Bx) comprend en outre un ou des fourreaux mobiles (34) qui sont disposés dessus-dessous vers la sortie ; et
- les deux vis (18) sont montées dans le mélangeur (12) de façon à ce que les sommets de filets de chaque vis viennent tangenter les surfaces de la vis opposée pour que les vis restent sensiblement en contact l'une par rapport à l'autre lors de la rotation des vis avec un angle et un entraxe qui permettent l'autonettoyage.

4. La ligne de fabrication de l'une quelconque des revendications précédentes, comprenant au moins deux machines de mélangeage et d'extrusion bi-vis (Bx) qui sont disposées en amont de l'installation de batch-off (BO) et en aval de l'outil à cylindres refroidisseur (OCR).

5. La ligne de fabrication de l'une quelconque des revendications précédentes, dans laquelle l'installation de fin de ligne (FL) comprend un ou des équipements pour effectuer un processus de fin de ligne choisi parmi la mise en palette et le stockage du mélange de caoutchouc.

6. Une ligne de fabrication (200) d'un mélange de caoutchouc comprenant une première ligne (201) qui réalise un processus de fabrication du mélange maître et une deuxième ligne (202) qui réalise un mélange final dans une séquence de mélangeage de caoutchouc, dans laquelle chacune des première et deuxième lignes comprend une ligne de fabrication de l'une quelconque des revendications 1 à 5.

7. Un procédé de mélangeage pour réaliser une variété de mélanges de caoutchouc dans une ligne de fabrication du type de l'une quelconque des revendications 1 à 5, le procédé comprenant les étapes suivantes :
- une étape d'introduction au mélangeur interne (MI) des matières premières nécessaires à la réalisation du produit ;
- une étape de refroidissement du mélange sortant du mélangeur (MI), cette étape comprenant l'étape d'introduire le mélange sortant du mélangeur interne (MI) à l'outil à cylindres refroidisseur (OCR) ;
- une étape de mélangeage du mélange refroidi réalisé par la machine de mélangeage bi-vis (Bx), cette étape comprenant l'étape d'introduction du mélange refroidi sortant de l'outil à cylindres refroidisseur (OCR) dans au moins une machine de mélangeage bi-vis ;
- une étape d'anticollage et refroidissement du mélange sortant de la machine de mélangeage Bₓ réalisée par l'installation de batch-off (BO) ;
- une étape de fin de ligne réalisée par l'installation de fin de ligne (FL) en aval de l'installation de batch-off BO.

8. Le procédé de la revendication 7, dans laquelle l'étape de fin de ligne comprend l'étape de mise en palette du mélange pendant laquelle le mélange sortant de l'installation de batch-off (BO) est déposé sur une ou des palettes.

9. Le procédé l'une quelconque des revendications 7 à 8, dans lequel l'étape de mélangeage du mélange refroidi comprend l'étape d'introduction des produits vulcanisants à chaque machine de mélangeage bi-vis (Bx), et dans lequel les produits vulcanisants comprennent les produits vulcanisants en poudre ou les produits vulcanisants en bloc.

10. Un procédé de mélangeage pour réaliser une variété de mélanges de caoutchouc dans une ligne de fabrication du type de la revendication 6, comprenant les étapes suivantes :
- une étape de réalisation du procédé de la revendication 7 ou de la revendication 8 par la première ligne (201), dans laquelle la première ligne réalise le procédé au moins une fois ; et
- une étape de réalisation du procédé de la revendication 9 par la deuxième ligne (202), dans laquelle la deuxième ligne réalise le procédé après la fin du procédé réalisée par la première ligne (201).

11. Le procédé de la revendication 10, comprenant en outre une étape de fin de ligne réalisée par la deuxième ligne (202), dans laquelle cette étape comprend l'étape de mise en palette du mélange pendant laquelle le mélange sortant de l'installation de batch-off (BO) de la deuxième ligne (202) est déposé sur une ou des palettes.
